# EUROPEAN PATENT SPECIFICATION

(11) **EP 3 541 007 B1**
(45) Date of publication and mention of the grant of the patent: **06.09.2023**
(21) Application number: 18192267.5
(22) Date of filing: 03.09.2018
(51) Int. Cl.: H04L 9/08, H04L 9/06

(54) **CRYPTOGRAPHIC COMMUNICATION APPARATUS, CRYPTOGRAPHIC COMMUNICATION SYSTEM, CRYPTOGRAPHIC COMMUNICATION METHOD AND COMPUTER-READABLE MEDIUM**
VORRICHTUNG ZUR KRYPTOGRAPHISCHEN KOMMUNIKATION, SYSTEM ZUR KRYPTOGRAFISCHEN KOMMUNIKATION, VERFAHREN ZUR KRYPTOGRAFISCHEN KOMMUNIKATION UND COMPUTERLESBARES MEDIUM
APPAREIL, SYSTÈME ET PROCÉDÉ DE COMMUNICATION CRYPTOGRAPHIQUE ET SUPPORT LISIBLE SUR ORDINATEUR

(30) Priority: 15.03.2018 JP 2018048491
(43) Date of publication of application: 18.09.2019
(73) Proprietor: Kabushiki Kaisha Toshiba, Tokyo 105-0023 (JP)
(72) Inventor: TANIZAWA, Yoshimichi, Tokyo (JP); TAKAHASHI, Ririka, Tokyo (JP); SATO, Hideaki, Tokyo (JP)
(74) Representative: Marks & Clerk LLP

(56) References cited:
- US-A1- 2014 013 103
- US-A1- 2015 043 730
- FU-GUO DENG ET AL: "Secure Direct Communication with a Quantum One-Time-Pad", ARXIV.ORG, CORNELL UNIVERSITY LIBRARY, 201 OLIN LIBRARY CORNELL UNIVERSITY ITHACA, NY 14853, 28 May 2004 (2004-05-28), XP080154504, DOI: 10.1103/PHYSREVA.69.052319

## Description

### FIELD

The present disclosure relates to a cryptographic communication apparatus, a cryptographic communication system, a cryptographic communication method, and a computer-readable medium.

### BACKGROUND

There is a known technology that performs cryptographic data communication using a cryptographic communication scheme such as one-time pad (OTP). OTP is a scheme that uses a key having a length identical to a length of data to be transmitted and performs encryption and decryption and discards the key once used. Information theory has assured that no wiretapper, how much he or she is knowledgeable, can decipher encrypted data transmitted and received through OTP.

Unfortunately, conventional technologies have troubles in further improving cryptographic communication speeds.

US20150043730A1 describes a streaming one time pad cipher using rotating ports for data encryption uses a One Time Pad (OTP) and an Exclusive Or (XOR) (or other cipher) with a public key channel to encrypt and decrypt OTP data. There is no method in cryptography to thwart the OTP/XOR method and it is proven impossible to crack. The method also rotates the ports of the channels periodically to increase communication obfuscation. Through pre-fetching and cache of OTP data, latency increases from encryption are kept to an absolute minimum as the XOR for encryption and decryption is done with a minimal number of instructions.

FU-GUO DENG et al: "Secure Direct Communication with a Quantum One-Time-Pad" ARXIV.ORG, CORNELL UNIVERSITY LIBRARY, 201 OLIN LIBRARY, CORNELL UNIVERSITY ITHACA, NY 14853, 28 May 2004(2004-05-28), XP080154504,DOI: 10.1103/PHYSREVA.69.052319 describes a quantum secure direct communication protocol using single photons. The protocol uses batches of single photons prepared randomly in one of four different states. These single photons serve as a one-time-pad which are used directly to encode the secret messages in one communication process.

### BRIEF DESCRIPTION OF THE DRAWINGS

FIG. 1 is a diagram of an exemplary key sharing scheme in an arrangement;
FIG. 2 is a diagram of an exemplary configuration of a cryptographic communication system in the arrangement;
FIG. 3 is a diagram of an exemplary functional configuration of a quantum cryptographic communication system in the arrangement;
FIG. 4 is a diagram for illustrating prefetch control for an encryption key and a decryption key in the arrangement;
FIG. 5 is a flowchart of operations performed by an encryption part in the arrangement;
FIG. 6 is a flowchart of operations performed by a decryption part in the arrangement;
FIG. 7A is a diagram for illustrating an exemplary control of a prefetch volume of the key in the arrangement;
FIG. 7B is a diagram for illustrating another exemplary control of the prefetch volume of the key in the arrangement;
FIG. 8A is a diagram of an exemplary execution of the encryption part and the decryption part performed through multi-processing in the arrangement;
FIG. 8B is a diagram of an exemplary execution of the encryption part and the decryption part performed through multi-threading in the arrangement;
FIG. 9A is a diagram of an exemplary execution of the encryption part and the decryption part with the number of processes changed from the case of FIG. 8A;
FIG. 9B is a diagram of an exemplary execution of the encryption part and the decryption part with the number of threads changed from the case of FIG. 8B; and
FIG. 10 is a diagram of an exemplary hardware configuration of a quantum cryptographic communication apparatus in the arrangement.

### DETAILED DESCRIPTION

A cryptographic communication apparatus according to an arrangement includes an encryption part, a decryption part, and a control unit. The encryption part prefetches an encryption key for encrypting plaintext data before receiving the plaintext data and, when receiving the plaintext data, encrypts the plaintext data using the encryption key. The decryption part prefetches a decryption key for decrypting cipher text data before receiving the cipher text data and, when receiving the cipher text data, decrypts the cipher text data using the decryption key. The control unit controls a volume of the encryption key to be prefetched and a volume of the decryption key to be prefetched.

The following details, with reference to the accompanying drawings, a cryptographic communication apparatus, a cryptographic communication system, a cryptographic communication method, and a computer-readable medium according to an arrangement.

The following first describes an exemplary case of sharing keys used for encryption and decryption by quantum key distribution (QKD).

### Example of Key Sharing Scheme

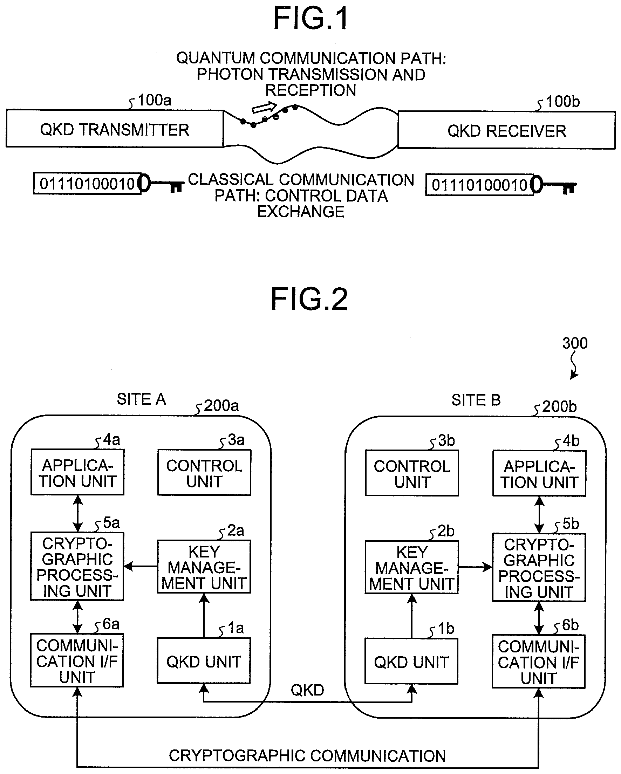

FIG. 1 is a diagram of an exemplary key sharing scheme in the arrangement. The sharing of the keys in the arrangement is performed using the quantum key distribution technology (hereinafter referred to as "QKD"). The QKD incorporates a QKD transmitter 100a and a QKD receiver 100b. The QKD transmitter 100a is connected with the QKD receiver 100b by an optical fiber cable. The QKD transmitter 100a transmits series of single photons consecutively. The QKD receiver 100b receives the series of single photons. The QKD transmitter 100a and the QKD receiver 100b securely share keys for encrypted data communication. It is noted that, in order for the QKD transmitter 100a and the QKD receiver 100b to share the keys, control data is exchanged via a classical communication path between the QKD transmitter 100a and the QKD receiver 100b. This control data exchange is referred to as key distillation.

The key (common key) shared between the QKD transmitter 100a and the QKD receiver 100b is digital data (random number sequence). The key shared by the QKD is guaranteed for not being wiretapped on the basis of the principles of quantum mechanics. Thus, performing the cryptographic communication using the key shared by QKD, which offers high security, enables highly secured communication to be achieved.

A cryptographic algorithm used for cryptographic communication may be one other than the one-time pad (OTP) described previously. Examples of the cryptographic algorithm include, but are not limited to, the advanced encryption standard (AES). The following description assumes that the cryptographic algorithm is OTP.

In the following, the QKD transmitter 100a and the QKD receiver 100b will be collectively referred to simply as a node. A key used for encryption by a first node (hereinafter referred to as an "encryption key") serves as a key used for decryption by a second node (hereinafter referred to as a "decryption key").

Consider full-duplex cryptographic data communication in which encrypted data is transmitted from a node on a transmission side to a node on a reception side and vice versa. The full-duplex cryptographic data communication requires that the cryptographic communication system be controlled entirely (key management) such that, out of keys shared between the nodes, an encryption key on the first node is used as a decryption key by the second node and a decryption key on the first node is used as an encryption key on the second node.

It is noted that a case in which a block cipher is used, as with AES, does not satisfy security in terms of information theory such as OTP. It is, however, common in AES to use an identical key for both the node transmitting encrypted data and the node receiving the encrypted data. Thus, managing keys by identifying the encryption key and the decryption key is not always necessary and keys may be managed simply in terms of a residual volume of the key (common key).

### Exemplary Configuration of Cryptographic Communication System

FIG. 2 is a diagram of an exemplary configuration of a cryptographic communication system 300 in the arrangement. The cryptographic communication system 300 in the arrangement includes a quantum cryptographic communication system 200a at a site A and a quantum cryptographic communication system 200b at a site B. The quantum cryptographic communication system 200a at the site A is connected with the quantum cryptographic communication system 200b at the site B by an optical fiber cable.

The quantum cryptographic communication system 200a at the site A includes a QKD unit 1a, a key management unit 2a, a control unit 3a, an application unit 4a, a cryptographic processing unit 5a, and a communication interface (I/F) unit 6a. Similarly, the quantum cryptographic communication system 200b at the site B includes a QKD unit 1b, a key management unit 2b, a control unit 3b, an application unit 4b, a cryptographic processing unit 5b, and a communication I/F unit 6b.

In the following, the quantum cryptographic communication system 200a and the quantum cryptographic communication system 200b, when the former is not differentiated from the latter, will be referred to simply as a quantum cryptographic communication system 200. Similarly, the QKD unit 1a and the QKD unit 1b (the key management unit 2a and the key management unit 2b, the control unit 3a and the control unit 3b, the application unit 4a and the application unit 4b, the cryptographic processing unit 5a and the cryptographic processing unit 5b, and the communication I/F unit 6a and the communication I/F unit 6b), when the former is not differentiated from the latter, will be referred to simply as a QKD unit 1 (a key management unit 2, a control unit 3, an application unit 4, a cryptographic processing unit 5, and a communication I/F unit 6).

In the example illustrated in FIG. 2, the QKD unit 1a at the site A is achieved by the QKD transmitter 100a described previously and the QKD unit 1b at the site B is achieved by the QKD receiver 100b described previously. The QKD unit at each site may nonetheless be achieved by both the QKD transmitter 100a and the QKD receiver 100b. Specifically, both sites may be configured so as to be capable of transmitting single photons.

The key management unit 2 at each site holds a key allocated to either the encryption key or the decryption key by the control unit 3 at the corresponding site. The allocated key is given to the cryptographic processing unit 5 at the corresponding side by the key management unit 2.

The application unit 4 at each site is achieved by any number of applications, each having a specific function. In the description of the arrangement, the application unit 4 does not perform encryption processing and transfers plaintext data to the cryptographic processing unit 5. Similarly, the application unit 4 does not perform decryption processing and receives plaintext data from the cryptographic processing unit 5.

The cryptographic processing unit 5 at each site, upon receipt of data from the application unit 4, encrypts the data using the encryption key. The cryptographic processing unit 5 at each site, upon receipt of cipher text data from the communication I/F unit 6, decrypts the cipher text data using the decryption key.

The communication I/F unit 6 at each site performs cryptographic communication using the cipher text data encrypted by the cryptographic processing unit 5 at the corresponding site.

The application unit 4 at each site, when having a function of encryption processing, may perform at least either one of the encryption processing and the decryption processing performed by the cryptographic processing unit 5.

The quantum cryptographic communication system 200 at each site may be achieved by a plurality of the quantum cryptographic communication apparatuses, or a single quantum cryptographic communication apparatus.

The following describes an exemplary functional configuration of the quantum cryptographic communication system 200 at each site in more detail.

### Exemplary Functional Configuration

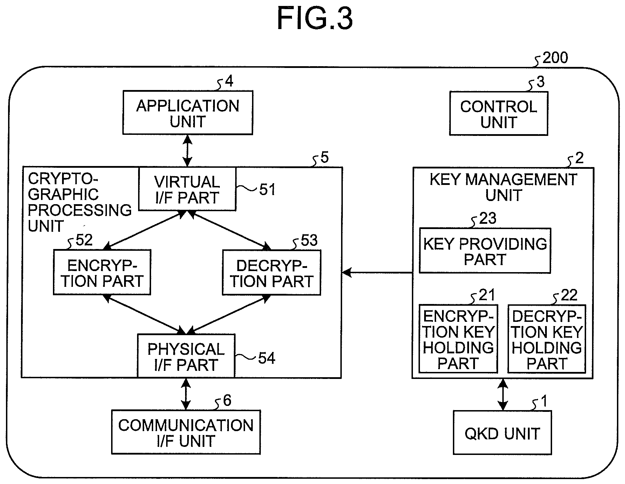

FIG. 3 is a diagram of an exemplary functional configuration of the quantum cryptographic communication system 200 in the arrangement. The quantum cryptographic communication system 200 includes the QKD unit 1, the key management unit 2, the control unit 3, the application unit 4, the cryptographic processing unit 5, and the communication I/F unit 6.

FIG. 3 also illustrates more detailed functional blocks (an encryption key holding part 21, a decryption key holding part 22, and a key providing part 23) of the key management unit 2 described above with reference to FIG. 2 and more detailed functional blocks (a virtual I/F part 51, an encryption part 52, a decryption part 53, and a physical I/F part 54) of the cryptographic processing unit 5 described above with reference to FIG. 2.

The QKD unit 1 generates by QKD a key (common key) shared with a communication destination apparatus. The QKD unit 1 inputs the generated key to the key management unit 2.

The key management unit 2 includes the encryption key holding part 21, the decryption key holding part 22, and the key providing part 23.

The encryption key holding part 21 holds a key (encryption key) used for encrypting data. The decryption key holding part 22 holds a key (decryption key) used for decrypting data.

Any method may be employed for holding the key. Examples of the key holding method include, but are not limited to, handling the key as a file having a fixed length (or a variable length) and assigning a key ID to the file. The key ID represents identification information identifying the key. Another possible key holding method is to hold (manage) keys using a database system, for example.

The key providing part 23 provides the cryptographic processing unit 5 with the key.

The control unit 3 controls operations of the quantum cryptographic communication system 200. For example, the control unit 3 controls allocation of the key (common key) generated by the QKD unit 1 to either the encryption key or the decryption key. The control unit 3 also controls prevention of delay in cryptographic communication speeds. Examples of the control to prevent the delay in the cryptographic communication speed include, but are not limited to, key prefetch control and parallelization control of cryptographic processing. The key prefetch control and parallelization control of cryptographic processing will be described in detail later.

The application unit 4 generates data transmitted to and received from the application unit 4 at another site.

The cryptographic processing unit 5, having received plaintext data from the application unit 4, encrypts the data using the encryption key provided by the key providing part 23 and inputs resultant cipher text data to the communication I/F unit 6. When the cipher text data is received from the communication I/F unit 6, the cryptographic processing unit 5 decrypts the cipher text data using the decryption key provided by the key providing part 23 and inputs the resultant plaintext data to the application unit 4.

Specifically, the cryptographic processing unit 5 includes the virtual I/F part 51, the encryption part 52, the decryption part 53, and the physical I/F part 54.

The virtual I/F part 51 serves as an interface between the cryptographic processing unit 5 and the application unit 4. The virtual I/F part 51 provides the application unit 4 with an interface identical to an interface of the ordinary communication I/F. The virtual I/F part 51 is, for example, a network interface mounted as a virtual device. The application unit 4 thus can perform communication without sensing processes performed by the cryptographic processing unit 5 or, for that matter, the very presence of the cryptographic processing unit 5. The foregoing eliminates the need for modifying the application unit 4 even with modification, addition, or deletion of encryption processing and decryption processing, and the like. Meanwhile, the cryptographic processing unit 5 can provide the cryptographic function regardless of, for example, the type of the application unit 4 and the number of application units 4 by providing the cryptographic processing function through the virtual I/F part 51.

The encryption part 52 encrypts the plaintext data received from the application unit 4 via the virtual I/F part 51 using the encryption key received from the key providing part 23 and transfers the resultant cipher text data to the communication I/F unit 6 via the physical I/F part 54. Because the cryptographic algorithm is OTP in the arrangement, the encryption processing corresponds to performing an exclusive OR (XOR) operation of the plaintext data and the encryption key.

The decryption part 53 decrypts the cipher text data received from the communication I/F unit 6 via the physical I/F part 54 using the decryption key received from the key providing part 23 and transfers the resultant plaintext data to the application unit 4 via the virtual I/F part 51. Because the cryptographic algorithm is OTP in the arrangement, the decryption processing corresponds to performing an exclusive OR (XOR) operation of the cipher text data and the decryption key.

The physical I/F part 54 serves as a connection interface between the cryptographic processing unit 5 and the communication I/F unit 6.

This completes the description of the configuration of the cryptographic processing unit 5. It is noted that the cryptographic processing unit 5 may be achieved as driver software provided by an operating system or as application software using a virtual interface function.

The communication I/F unit 6 is a network interface for communicating with another apparatus. For example, the cipher text data described previously is transmitted to and received from another apparatus via the communication I/F unit 6.

The following details the control of prevention of delay in cryptographic communication speeds of the cryptographic communication system 300 in the arrangement.

The following first details the key prefetch control.

### Key Prefetch Control

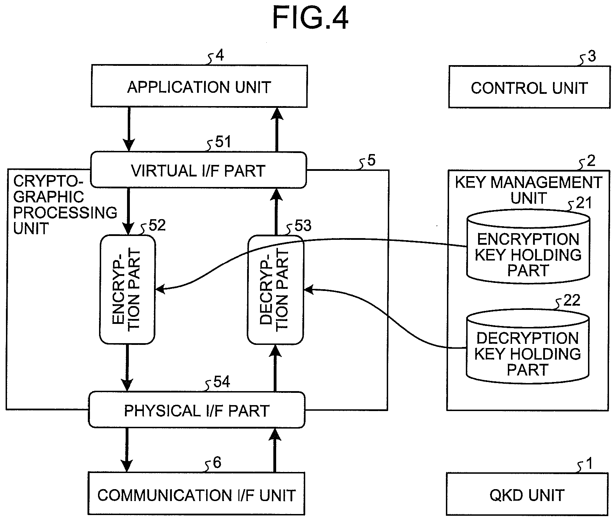

FIG. 4 is a diagram for illustrating the prefetch control for the encryption key and the decryption key in the arrangement. As described previously, the encryption part 52 encrypts the plaintext data received from the application unit 4 via the virtual I/F part 51 using the encryption key received from the key providing part 23 and transfers the resultant cipher text data to the communication I/F unit 6 via the physical I/F part 54. If the encryption part 52 acquires the encryption key from the key providing part 23 after having received the plaintext data from the application unit 4, at this time, time required for the acquisition of the encryption key directly constitutes a delay in encryption processing and transmission processing, resulting in lower cryptographic communication speeds. When the key management unit 2 holds the encryption key in a file system, for example, a delay in reading the file increases the delay in the cryptographic communication speed.

Similarly, the decryption part 53 decrypts the cipher text data received from the communication I/F unit 6 via the physical I/F part 54 using the decryption key received from the key providing part 23 and transfers the resultant plaintext data to the application unit 4 via the virtual I/F part 51. If the decryption part 53 acquires the decryption key from the key providing part 23 after having received the cipher text data from the communication I/F unit 6, at this time, time required for the acquisition of the decryption key directly constitutes a delay in decryption processing and transmission processing, resulting in lower cryptographic communication speeds. When the key management unit 2 holds the decryption key in a file system, for example, a delay in reading the file increases the delay in the cryptographic communication speed.

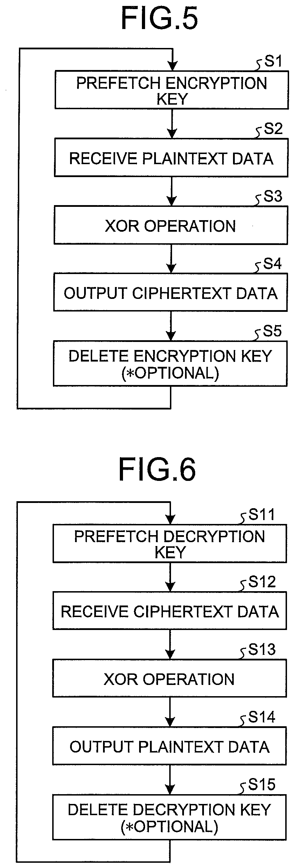

The following describes, with reference to FIGS. 5 and 6, the key prefetch control that prevents delay in the cryptographic communication speed.

FIG. 5 is a flowchart of operations performed by the encryption part 52 in the arrangement. The example of FIG. 5 assumes that the cryptographic algorithm is OTP.

The encryption part 52 first prefetches the encryption key by acquiring from the key providing part 23 the encryption key having a volume (size) established by the control unit 3 before receiving the plaintext data from the application unit 4 (Step S1). The prefetched encryption key is held in, for example, a memory to which the encryption part 52 refers.

The encryption part 52, having received the plaintext data from the application unit 4 (Step S2), encrypts the plaintext data through an XOR operation of the encryption key prefetched at Step S1 and the plaintext data (Step S3). The foregoing arrangement can prevent the delay in the cryptographic communication speed involved in the acquisition of the encryption key from occurring.

The encryption part 52 outputs the cipher text data encrypted through the XOR operation at Step S3 (Step S4).

The encryption part 52 deletes the encryption key used in the XOR operation at Step S3 (Step S5).

The step of deletion at Step S5 by the encryption part 52 is optional. As described previously, any encryption key once used is no longer used again in OTP. This requires that the encryption key be deleted. The encryption key deletion step may be performed separately by the key management unit 2 or the control unit 3, or by the encryption part 52. In addition, the step of deletion of the encryption key by the encryption part 52 does not necessarily need to be performed on a real-time basis at Step S5, but may be performed later. Specifically, when the encryption part 52 is to receive an input of plaintext data to be next processed, for example, the encryption part 52 may delete the encryption key used for the preceding encryption process after the subsequent plaintext data is encrypted. This arrangement can prevent a delay in the cryptographic communication speed as a result of the deletion of the encryption key from occurring.

FIG. 6 is a flowchart of operations performed by the decryption part 53 in the arrangement. The example of FIG. 6 assumes that the cryptographic algorithm is OTP.

The decryption part 53 first prefetches the decryption key by acquiring from the key providing part 23 the decryption key having a volume (size) established by the control unit 3 before receiving the cipher text data from the communication I/F unit 6 (Step S11). The prefetched decryption key is held in, for example, a memory to which the decryption part 53 refers.

The decryption part 53, having received the cipher text data from the communication I/F unit 6 (Step S12), decrypts the cipher text data through an XOR operation of the decryption key prefetched at Step S11 and the cipher text data (Step S13). The foregoing arrangement can prevent the delay in the cryptographic communication speed involved in the acquisition of the encryption key from occurring.

The decryption part 53 outputs the plaintext data decrypted through the XOR operation at Step S13 (Step S14).

The decryption part 53 deletes the decryption key used in the XOR operation at Step S13 (Step S15).

The step of deletion at Step S15 by the decryption part 53 is optional. As described previously, any decryption key once used is no longer used again in OTP. This requires that the decryption key be deleted. The step of deletion of the decryption key may be performed separately by the key management unit 2 or the control unit 3, or by the decryption part 53. In addition, the step of deletion of the decryption key by the decryption part 53 does not necessarily need to be performed on a real-time basis at Step S15, but may be performed later. Specifically, when the decryption part 53 is to receive an input of cipher text data to be next processed, for example, the decryption part 53 may delete the decryption key used for the preceding decryption process after the subsequent cipher text data is decrypted. This arrangement can prevent a delay in the cryptographic communication speed as a result of the deletion of the decryption key from occurring.

The following details key prefetch volume control (control of space in a memory 55 (56) that holds the prefetched key).

### Key Prefetch Volume Control

When a prefetched key has been used, a new key needs to be prefetched to make up for the used prefetched key. Various methods are possible for controlling the volume (size) of the key to be prefetched. One possible method, for example, is that the encryption part 52 (decryption part 53) newly prefetches an encryption key (decryption key) having a predetermined size at all times regardless of a residual volume of the encryption key (decryption key) currently held in a memory. Another possible method, for example, is that the encryption part 52 (decryption part 53) newly reads for replenishment from the key management unit 2 the encryption key (decryption key) for the size of the encryption key (decryption key) that has been used such that the encryption key (decryption key) having a predetermined volume is held in the memory at all times.

By prefetching the encryption key (decryption key), the encryption part 52 (decryption part 53) can avoid delay in reading the encryption key (decryption key) occurring at the start of the encryption processing (decryption processing). When cryptographic communication sessions occur consecutively, however, understandably the prefetched encryption key (decryption key) is exhausted. When the prefetched encryption key (decryption key) is exhausted, a delay occurs in communication for reading the encryption key (decryption key).

A key (common key) used for the encryption key (decryption key) is generated by the QKD unit 1 and the common key is allocated to the encryption key or the decryption key by the control unit 3. Thus, the encryption part 52 (decryption part 53) is not necessarily entitled to unconditionally prefetch the encryption key (decryption key) having any given volume. Thus, the control unit 3, for example, controls (establishes) a volume of the encryption key (decryption key) to be prefetched by the encryption part 52 (decryption part 53) on the basis of several factors. Alternatively, the control unit, for example, controls (establishes) a size of a memory space allocated for storing the prefetched encryption key and a size of a memory space allocated for storing the prefetched decryption key on the basis of several factors.

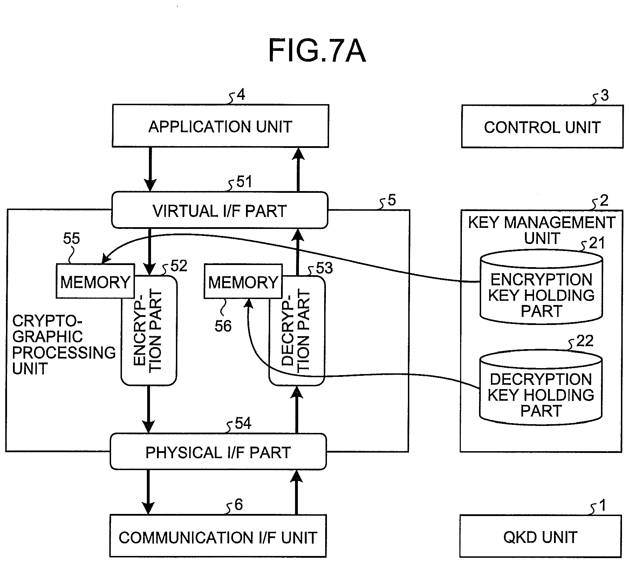

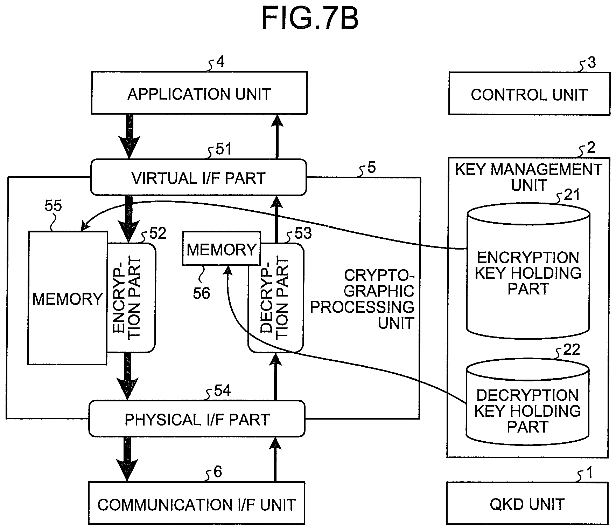

FIGS. 7A and 7B are each a diagram for illustrating exemplary control of the prefetch volume of the key in the arrangement. The memory 55 stores the encryption key prefetched by the encryption part 52. The memory 56 stores the decryption key prefetched by the decryption part 53.

The example of FIG. 7A illustrates a case in which the memory 55 allocated for storing the prefetched encryption key has a size equal to a size of the memory 56 allocated for storing the prefetched decryption key. The example of FIG. 7B illustrates a case in which the memory 55 allocated for storing the prefetched encryption key has a size greater than a size of the memory 56 allocated for storing the prefetched decryption key.

The following describes control methods (A) to (D) as exemplary specific control methods for the key prefetch volume.

### (A) Control based on traffic volume

For example, the control unit 3 controls the volume of the encryption key to be prefetched and the volume of the decryption key to be prefetched using at least either one of communication statistical information and communication history information of the cryptographic communication.

The communication statistical information and the communication history information include, for example, a volume of communication traffic, a volume of transmission traffic, a volume of reception traffic, and communication errors. The communication statistical information and the communication history information are acquired by, for example, the virtual I/F part 51, the physical I/F part 54, and the communication I/F unit 6.

Specifically, when the volume of communication traffic is large, for example, the control unit 3 increases the volume of the encryption key (decryption key) to be prefetched (size of the memory 55 (56) that holds the prefetched encryption key (decryption key)); when the volume of communication traffic is small, the control unit 3 decreases the volume of the encryption key (decryption key) to be prefetched (size of the memory 55 (56) that holds the prefetched encryption key (decryption key)). The foregoing arrangement allows a greater volume of the encryption key (decryption key) to be prefetched when the volume of communication traffic is large, to thereby reduce a likelihood that the prefetched encryption key (decryption key) will be exhausted.

When there is imbalance between the volume of transmission traffic and the volume of reception traffic, in particular, the control unit 3 may control the size of the memory 55 and the size of the memory 56 so that the former differs from the latter. When, for example, the volume of transmission traffic is greater than the volume of reception traffic, the control unit 3 increases the volume of the encryption key to be prefetched (size of the memory 55 that holds the prefetched encryption key) and decreases the volume of the decryption key to be prefetched (size of the memory 56 that holds the prefetched decryption key). The foregoing arrangement enables an effective use of the memory size that is limited in the quantum cryptographic communication system 200 and achieves adjustment of the key prefetch volume and optimization of the cryptographic communication speed.

### (B) Control based on key residual volume

When the residual volume of the encryption key held in the encryption key holding part 21 is greater than the residual volume of the decryption key held in the decryption key holding part 22, for example, the control unit 3 varies the volume of the encryption key to be prefetched (size of the memory 55 that holds the prefetched encryption key) and the volume of the decryption key to be prefetched so that the former is greater than the latter. When the residual volume of the decryption key held in the decryption key holding part 22 is greater than the residual volume of the encryption key held in the encryption key holding part 21, the control unit 3 varies the volume of the decryption key to be prefetched (size of the memory 56 that holds the prefetched decryption key) and the volume of the encryption key to be prefetched so that the former is greater than the latter.

For example, the control unit 3 checks the residual volume of the encryption key (decryption key), and when the residual volume of the encryption key (decryption key) is small (e.g., when the residual volume is equal to or smaller than a threshold), the control unit 3 does not perform the prefetch (or decrease the prefetch volume) for fear of a likelihood that the prefetch of the encryption key (decryption key) will be unsuccessful (will be inefficient).

Alternatively, the method for increasing the prefetch volume for one having a greater key residual volume (size of the memory 55 (56) that holds the prefetched encryption key (decryption key)) may be combined with the method for decreasing the prefetch volume for one having a smaller key residual volume (size of the memory 55 (56) that holds the prefetched encryption key (decryption key)). The foregoing arrangement enables an effective use of the memory size that is limited in the quantum cryptographic communication system 200 and achieves adjustment of the key prefetch volume and optimization of the cryptographic communication speed.

### (C) Control based on key generation speed

The control unit 3 increases the volume of the encryption key to be prefetched (size of the memory 55 that holds the prefetched encryption key) and the volume of the decryption key to be prefetched (size of the memory 56 that holds the prefetched decryption key) with an increase in generation (sharing) speeds at which the key (common key) is generated by the QKD unit 1, for example.

The generation (sharing) speed of the key (common key) is, for example, a speed at which the encryption key used on the transmission side (random number sequence) and the decryption key used on the reception side (the same random number sequence as that used on the transmission side) are generated. The lower the key generation speeds of the QKD unit 1 become, the greater likely the key generation speed restricts the cryptographic communication speed (serves as a bottleneck), compared with an effect on the cryptographic communication speed delayed by the encryption part 52 (decryption part 53) reading the encryption key (decryption key). In this case, the encryption part 52 (decryption part 53) does not perform prefetch (or reduces the prefetch volume) because of a possible likelihood that prefetching the encryption key (decryption key) will be inefficient.

The prefetch volume of the encryption key (decryption key) may be controlled according to the residual volume of the key (common key) instead of the key (common key) generation speed. For example, the control unit 3 increases the volume of the encryption key to be prefetched and the volume of the decryption key to be prefetched with an increase in residual volumes of the key (common key) allocated to the encryption key or the decryption key.

### (D) Control according to application

For example, the control unit 3 controls the volume of the encryption key to be prefetched (size of the memory 55 that holds the prefetched encryption key) and the volume of the decryption key to be prefetched (size of the memory 56 that holds the prefetched decryption key) according to the application (application unit 4) that generates the plaintext data. Characteristics of applications, including a ratio of a communication data volume, a transmission data volume, and a reception data volume, and frequency of occurrence of communication data vary according to the type of application. For example, the control unit 3 controls the volume of the encryption key to be prefetched (size of the memory 55 that holds the prefetched encryption key) and the volume of the decryption key to be prefetched (size of the memory 56 that holds the prefetched decryption key) using, for example, a setting file that indicates types of control variable according to the characteristics of the applications.

Specifically, when the application has a characteristic that the reception data volume (or reception frequency) is smaller than the transmission data volume (or transmission frequency), for example, the control unit 3 increases the volume of the encryption key to be prefetched (size of the memory 55 that holds the prefetched encryption key) and decreases the volume of the decryption key to be prefetched (size of the memory 56 that holds the prefetched decryption key). The foregoing arrangement enables an effective use of the memory size that is limited in the quantum cryptographic communication system 200 and achieves adjustment of the key prefetch volume and optimization of the cryptographic communication speed.

The volume of the key to be prefetched (size of the memory 55 (56) that holds the prefetched key) may be established in advance at the start of the system or may be dynamically varied through the use of the control methods (A) to (D) while the system is running.

The following details the parallelization control of cryptographic processing (encryption processing and decryption processing).

### Parallelization Control of Cryptographic Processing

The control unit 3 performs parallelization control that allows the encryption processing performed by the encryption part 52 (see FIG. 5) and the decryption processing performed by the decryption part 53 (see FIG. 6) to be performed by multi-processing or multi-threading.

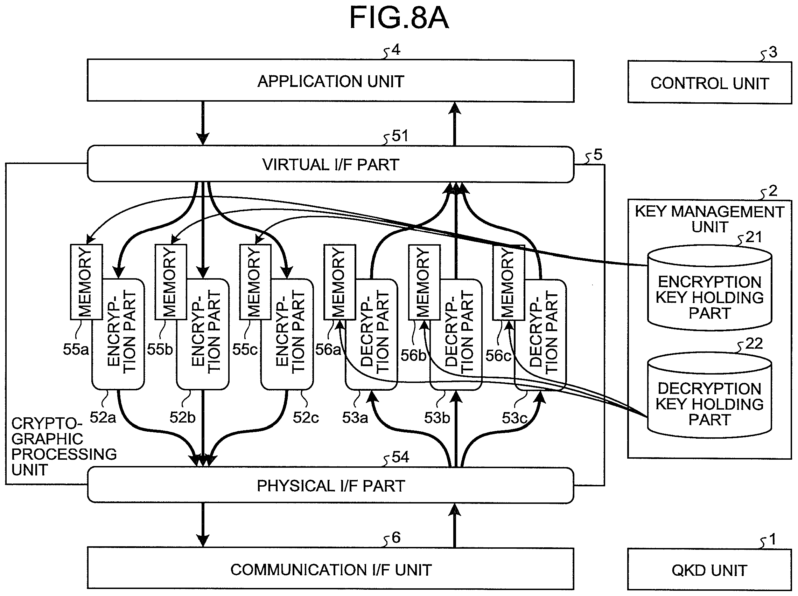

FIG. 8A is a diagram of an exemplary execution of the encryption part 52 and the decryption part 53 performed through multi-processing in the arrangement. FIG. 8A illustrates an operation of the encryption part 52, operating as an encryption part 52a, an encryption part 52b, and an encryption part 52c associated with three respective processes, and an operation of the decryption part 53, operating as a decryption part 53a, a decryption part 53b, and a decryption part 53c associated with the respective processes.

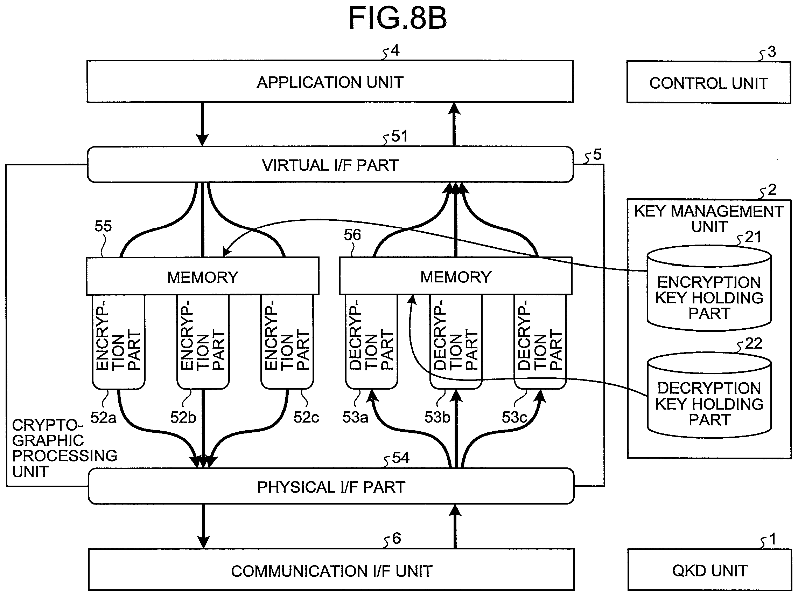

FIG. 8B is a diagram of an exemplary execution of the encryption part 52 and the decryption part 53 performed through multi-threading in the arrangement. FIG. 8B illustrates an operation of the encryption part 52, operating as the encryption part 52a, the encryption part 52b, and the encryption part 52c associated with three respective threads, and an operation of the decryption part 53, operating as the decryption part 53a, the decryption part 53b, and the decryption part 53c associated with the respective threads.

The following describes configurations of the encryption key holding part 21 and the decryption key holding part 22 when the encryption part 52 and the decryption part 53 are parallelized by multi-processing or multi-threading.

The encryption key holding part 21 may be provided for each of the encryption part 52a, the encryption part 52b, and the encryption part 52c. When the encryption key is held as a file in a file system, for example, different directories for holding different encryption keys may be assigned, so that the encryption key can be identified for each of the encryption part 52a, the encryption part 52b, and the encryption part 52c. When the encryption key is held as a file in a file system, the encryption key for each of the encryption part 52a, the encryption part 52b, and the encryption part 52c may be identified on the basis of rules for governing assignment of the key ID assigned to each encryption key.

For example the single encryption key holding part 21 may accept access from the encryption part 52a, the encryption part 52b, and the encryption part 52c.

The configuration of the decryption key holding part 22 is identical to the configuration of the encryption key holding part 21 described above and thus will not be described again.

The following describes configurations of the cryptographic processing unit 5 when the encryption part 52 and the decryption part 53 are parallelized by multi-processing or multi-threading.

The virtual I/F part 51 needs to distribute plaintext data received from the application unit 4 to the encryption part 52a, the encryption part 52b, and the encryption part 52c. Distributing one third of the plaintext data into each of the encryption parts 52a to 52c is generally efficient. This distribution process is preferably mounted in the virtual I/F part 51. The distribution process by which received data is distributed to a plurality of processing parts can be achieved by, for the Linux (registered trademark) operating system or the like, a method called bonding used for redundancy and load distribution, for example, of a network interface card (NIC), and an extension of the bonding.

When the encryption part 52 operates through multi-processing (see FIG. 8A), a memory 55a, a memory 55b, and a memory 55c are individually assigned to the encryption part 52a, the encryption part 52b, and the encryption part 52c, respectively. Similarly, when the decryption part 53 operates through multi-processing, a memory 56a, a memory 56b, and a memory 56c are individually assigned to the decryption part 53a, the decryption part 53b, and the decryption part 53c, respectively.

When the encryption part 52 operates through multi-threading (see FIG. 8B), the single common memory 55 is shared among the encryption part 52a, the encryption part 52b, and the encryption part 52c. Similarly, when the decryption part 53 operates through multi-threading, the single common memory 56 is shared among the decryption part 53a, the decryption part 53b, and the decryption part 53c.

In multi-threading, the size of the space in the memory 55 (56) to which the encryption part 52a, the encryption part 52b, and the encryption part 52c (the decryption part 53a, the decryption part 53b, and the decryption part 53c), respectively, refer may be variable. By varying the size of each memory space, the encryption part 52a, the encryption part 52b, and the encryption part 52c (the decryption part 53a, the decryption part 53b, and the decryption part 53c) each can prefetch the encryption key (decryption key) having a specific size.

The physical I/F part 54, having received cipher text data from each of the encryption part 52a, the encryption part 52b, and the encryption part 52c, outputs the cipher text data from the single communication I/F unit 6 and controls communication so that the cipher text data can be received by the decryption part 53a, the decryption part 53b, or the decryption part 53c connected with the physical I/F part 54 in a counter apparatus. Any method may be used to control the abovementioned communication. For example, by assigning a specific identifier to each of the encryption part 52a, the encryption part 52b, and the encryption part 52c, the cipher text data can be exchanged between the encryption part 52a and the decryption part 53a as a counterpart to the encryption part 52a, between the encryption part 52b and the decryption part 53b as a counterpart to the encryption part 52b, and between the encryption part 52c and the decryption part 53c as a counterpart to the encryption part 52c. Examples of specific mounting methods include, but are not limited to, performing transmission control protocol (TCP) communication using a specific port number assigned to each pair of the encryption part 52a (52b, 52c) and the decryption part 53a (53b, 53c), performing internet protocol (IP) communication using a specific IP address assigned to each pair of the encryption part 52a (52b, 52c) and the decryption part 53a (53b, 53c), and performing communication using a specific media access control (MAC) address assigned to each pair of the encryption part 52a (52b, 52c) and the decryption part 53a (53b, 53c).

Even faster cryptographic communication processing is enabled by operating the cryptographic processing unit 5 through multi-processing or multi-threading when resources including computer processors required for the parallelization control are sufficiently available. Meanwhile, because computer resources are limited, indiscriminately increasing the number of processes or threads does not lead to cryptographic communication processing at higher speeds.

The following describes methods, performed by the control unit 3, for controlling (changing) the number of processes or the number of threads on the basis of several factors.

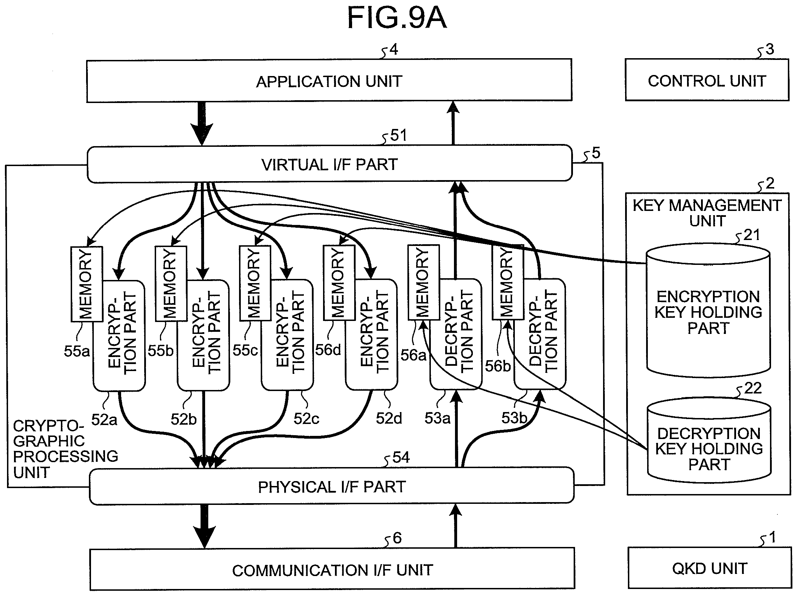

FIG. 9A is a diagram of an exemplary execution of the encryption part and the decryption part with the number of processes changed from the case of FIG. 8A. FIG. 9A illustrates a case in which the number of processes allocated to the encryption part 52 increases from 3 to 4 and the number of processes allocated to the decryption part 53 decreases from 3 to 2.

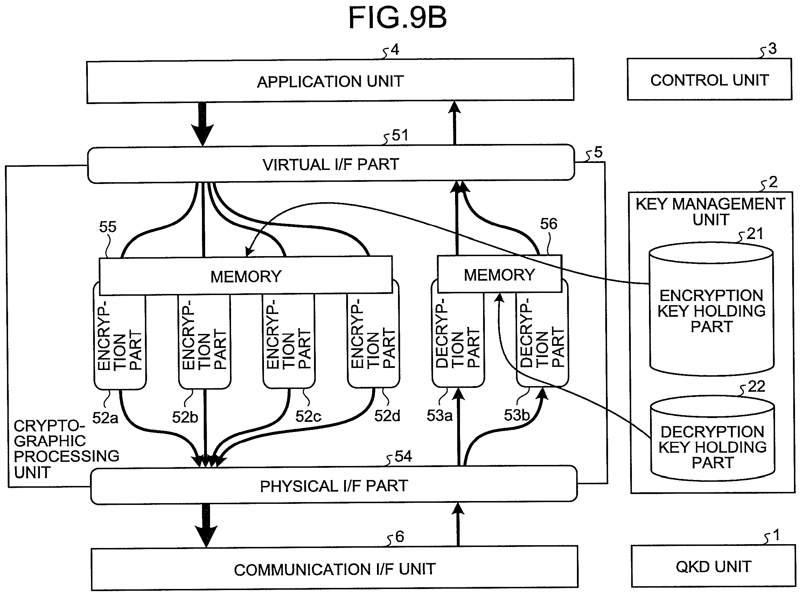

FIG. 9B is a diagram of an exemplary execution of the encryption part and the decryption part with the number of threads changed from the case of FIG. 8B. FIG. 9B illustrates a case in which the number of threads allocated to the encryption part 52 increases from 3 to 4 and the number of threads allocated to the decryption part 53 decreases from 3 to 2.

The following describes control methods (A) to (D) as exemplary control methods for the number of processes (threads).

### (A) Control based on traffic volume

For example, the control unit 3 changes the number of processes or the number of threads using at least either one of the communication statistical information and the communication history information of the cryptographic communication. The communication statistical information and the communication history information are the same as those for the key prefetch control described previously and thus will not be described again.

Specifically, when the volume of communication traffic is large, for example, the control unit 3 increases the number of processes or the number of threads and when the volume of communication traffic is small, the control unit 3 decreases the number of processes or the number of threads. The foregoing arrangement allows encryption processing (decryption processing) to be performed using a greater number of processes or threads when the volume of communication traffic is large, so that the encryption processing (decryption processing) can be performed at higher speeds.

When there is imbalance between the volume of transmission traffic and the volume of reception traffic, in particular, the control unit 3 may control the number of processes (threads) allocated to the encryption processing and the number of processes (threads) allocated to the decryption processing so that the former differs from the latter. When, for example, the volume of transmission traffic is greater than the volume of reception traffic, the control unit 3 increases the number of processes (threads) allocated to the encryption processing and decreases the number of processes (threads) allocated to the decryption processing. The foregoing arrangement enables an effective use of the resources, including processors, that are limited in the quantum cryptographic communication system 200 and achieves a higher and optimized cryptographic communication speed.

### (B) Control based on key residual volume

When the residual volume of the encryption key held in the encryption key holding part 21 is greater than the residual volume of the decryption key held in the decryption key holding part 22, for example, the control unit 3 varies the number of processes (threads) allocated to the encryption processing and the number of processes (threads) allocated to the decryption processing so that the former is greater than the latter. When the residual volume of the decryption key held in the decryption key holding part 22 is greater than the residual volume of the encryption key held in the encryption key holding part 21, for example, the control unit 3 varies the number of processes (threads) allocated to the encryption processing and the number of processes (threads) allocated to the decryption processing so that the latter is greater than the former.

For example, the control unit 3 checks the residual volume of the encryption key (decryption key), and when the residual volume is small (e.g., when the residual volume is equal to or smaller than a threshold), the control unit 3 does not increase (or decrease) the number of processes (threads). This is because of the following reason. Specifically, when the residual volume of the encryption key (decryption key) is small, the residual volume of the encryption key (decryption key) serves as a bottleneck and an increase in the number of processes (threads) may not allow the cryptographic communication speed to be higher.

Alternatively, the method for increasing the number of processes (threads) for one having a greater key residual volume may be combined with the method for decreasing the number of processes (threads) for one having a smaller key residual volume. The foregoing arrangement enables an effective use of the resources, including processors, that are limited in the quantum cryptographic communication system 200 and achieves a higher and optimized cryptographic communication speed.

### (C) Control based on key generation speed

The control unit 3 increases the number of processes (threads) allocated to the encryption processing and the number of processes (threads) allocated to the decryption processing with an increase in generation (sharing) speeds at which the key (common key) is generated by the QKD unit 1, for example. The generation (sharing) speed of the key (common key) is as described previously in describing the key prefetch control and will not be described again.

The lower the key generation speeds of the QKD unit 1 become, the greater likely the key generation speed restricts the cryptographic communication speed (serving as a bottleneck), compared with an effect on the cryptographic communication speed delayed by the encryption part 52 (decryption part 53) performing the encryption processing (decryption processing). In this case, the control unit 3 does not increase (or decreases) the number of processes (threads) because of a likelihood that increasing the number of processes (threads) to be allocated to the encryption part 52 (decryption part 53) will be inefficient.

The number of processes (threads) may still be controlled according to the residual volume of the key (common key) instead of the generation speed of the key (common key). For example, the control unit 3 increases more the number of processes (threads) allocated to the encryption processing and the number of processes (threads) allocated to the decryption processing with an increase in residual volumes of the key (common key) to be allocated to the encryption key or the decryption key.

### (D) Control according to application

For example, the control unit 3 controls the number of processes (threads) allocated to the encryption processing and the number of processes (threads) allocated to the decryption processing according to the application (application unit 4) that generates the plaintext data. Characteristics of applications, including the ratio of the communication data volume, the transmission data volume, and the reception data volume, and the frequency of occurrence of communication data vary according to the type of application. For example, the control unit 3 controls the number of processes (threads) allocated to the encryption processing and the number of processes (threads) allocated to the decryption processing using, for example, a setting file that indicates types of control variable according to the characteristics of the applications.

Specifically, when the application has a characteristic that the reception data volume (or reception frequency) is smaller than the transmission data volume (or transmission frequency), for example, the control unit 3 increases the number of processes (threads) allocated to the encryption processing and decreases the number of processes (threads) allocated to the decryption processing. The foregoing arrangement enables an effective use of the resources, including processors, that are limited in the quantum cryptographic communication system 200 and achieves a higher and optimized cryptographic communication speed.

An agreement needs to be reached on the number of processes (threads) with a counter quantum cryptographic communication system 200. Specifically, when the number of processes (threads) of the encryption part 52 of the quantum cryptographic communication system 200a at the site A is N (N is an integer of 1 or more) and the number of processes (threads) of the decryption part 53 of the quantum cryptographic communication system 200a at the site A is M (M is an integer of 1 or more), the number of processes (threads) of the encryption part 52 of the quantum cryptographic communication system 200b at the counter site B needs to be N and the number of processes (threads) of the decryption part 53 of the quantum cryptographic communication system 200b at the counter site B needs to be M.

The number of processes (threads) may be established in advance at the start of the system or may be dynamically varied through the use of the control methods (A) to (D) while the system is running. When dynamically varying the number of processes (threads), the control unit 3 similarly varies the number of processes (threads) of the counter quantum cryptographic communication system 200 through, for example, a control method that exchanges control signals.

The following describes an exemplary hardware configuration of the quantum cryptographic communication apparatus for achieving the quantum cryptographic communication system 200 (see FIG. 2) in the arrangement.

### Exemplary Hardware Configuration

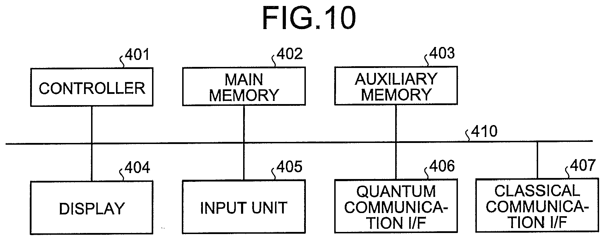

FIG. 10 is a diagram of an exemplary hardware configuration of the quantum cryptographic communication apparatus in the arrangement. The quantum cryptographic communication apparatus in the arrangement includes a controller 401, a main memory 402, an auxiliary memory 403, a display 404, an input unit 405, a quantum communication I/F 406, and a classical communication I/F 407.

The controller 401, the main memory 402, the auxiliary memory 403, the display 404, the input unit 405, the quantum communication I/F 406, and the classical communication I/F 407 are connected with each other via a bus 410.

The controller 401 executes a program loaded in the main memory 402 from the auxiliary memory 403. The main memory 402 is, for example, a read only memory (ROM) or a random access memory (RAM). The auxiliary memory 403 is, for example, a hard disk drive (HDD) or a memory card.

The display 404 displays information indicating, for example, a status of the quantum cryptographic communication apparatus. The display 404 is, for example, a liquid crystal display. The input unit 405 receives an input from a user. The input unit 405 is, for example, a keyboard or a mouse. The display 404 and the input unit 405 may not have to be included, if the quantum cryptographic communication apparatus is connected with an information processing apparatus and the application unit 4 (see FIG. 2), for example, is operated by the information processing apparatus. In this case, setting, for example, of the quantum cryptographic communication apparatus is made by a terminal connected via the classical communication I/F 407.

The quantum communication I/F 406 is an interface for connecting to a quantum communication path through which a single photon is transmitted.

The classical communication I/F 407 is an interface for connecting to a classical communication path (control communication path) such as the Ethernet (registered trademark). The classical communication I/F 407 may be wireless.

The program executed by the quantum cryptographic communication apparatus in the arrangement is recorded as an installable or executable file in a computer-readable recording medium such as a compact disc read only memory (CD-ROM), a memory card, a compact disc recordable (CD-R), and a digital versatile disc (DVD) and provided as a computer program product.

The program executed by the quantum cryptographic communication apparatus in the arrangement may still be stored in a computer connected to a network such as the Internet and provided by being downloaded via the network.

Furthermore, the program executed by the quantum cryptographic communication apparatus in the arrangement may be provided via a network such as the Internet without being downloaded.

The program executed by the quantum cryptographic communication apparatus in the arrangement may be provided as being incorporated in, for example, a ROM, in advance.

The program executed by the quantum cryptographic communication apparatus in the arrangement has a modular configuration including functions that can be achieved by a program, out of the functional configuration of the quantum cryptographic communication apparatus in the arrangement.

The functions achieved by the program are loaded in the main memory 402 as a result of the controller 401 loading the program from a storage medium such as the auxiliary memory 403 and executing the loaded program. Specifically, the functions achieved by the program are generated on the main memory 402.

Part or all of the functions of the quantum cryptographic communication apparatus in the arrangement may be achieved by hardware such as an integrated circuit (IC). The IC is, for example, a processor that dedicates for specific processing.

When a plurality of processors are employed to achieve the functions, each of the processes may achieve a single function or two or more functions.

The quantum cryptographic communication apparatus in the arrangement may be operated in any manner. The quantum cryptographic communication apparatus in the arrangement may, for example, be operated as an apparatus that constitutes a cloud system on a network.

As described above, in the cryptographic communication system 300, the encryption part 52 prefetches an encryption key for encrypting plaintext data before receiving the plaintext data and, when having received the plaintext data, encrypts the plaintext data using the encryption key. The decryption part 53 prefetches a decryption key for decrypting cipher text data before receiving the cipher text data and, when having received the cipher text data, decrypts the cipher text data using the decryption key. The control unit 3 controls the volume of the encryption key to be prefetched and the volume of the decryption key to be prefetched.

Thus, the cryptographic communication system 300 in the arrangement can further improve the cryptographic communication speed.

While certain arrangements have been described, these arrangements have been presented by way of example only, and are not intended to limit the scope of the claims. Indeed, the novel apparatuses described herein may be embodied in a variety of other forms; furthermore, various omissions, substitutions and changes in the form of the apparatuses described herein may be made without departing from the scope of the inventions.
The accompanying claims are intended to cover such forms or modifications as would fall within the scope of the inventions.

According to an aspect of the present invention, there is provided a cryptographic communication system as set-out in claim 1. Optional features of this aspect are set-out in claims 2 to 10.

According to another aspect of the present invention, there is provided a cryptographic communication system as set-out in Claim 11.

According to another aspect of the present invention, there is provided a cryptographic communication method as set-out in Claim 12.

According to another aspect of the present invention, there is provided a computer readable medium as set-out in Claim 13.

## Claims

1. A cryptographic communication apparatus, comprising:
an encryption part (52) adapted to prefetch an encryption key for encrypting plaintext data before receiving the plaintext data and, when receiving the plaintext data, encrypt the plaintext data using the encryption key;
a decryption part (53) adapted to prefetch a decryption key for decrypting cipher text data before receiving the cipher text data and, when receiving the cipher text data, decrypt the cipher text data using the decryption key; and
a control unit (3) adapted to control a volume of the encryption key to be prefetched and a volume of the decryption key to be prefetched, wherein
the control unit (3) is adapted to allocate a common key shared with a communication destination apparatus, to the encryption key or the decryption key and increase the volume of the encryption key to be prefetched and the volume of the decryption key to be prefetched with an increase in speeds at which the common key is generated , increase the volume of the encryption key to be prefetched with an increase in a residual volume of an encryption key holding part (21) holding the encryption key allocated from the common key, and increase the volume of the decryption key to be prefetched with an increase in a residual volume of a decryption key holding part (22) holding the decryption key allocated from the common key, and
the control unit (3) is adapted to:
identify a volume of communication traffic, a volume of transmission traffic, and a volume of reception traffic by using at least either one of communication statistical information and communication history information of cryptographic communication by the cryptographic communication apparatus; and
increase the volume of the encryption key to be prefetched and the volume of the decryption key to be prefetched with an increase in the volume of the communication traffic; and increase the volume of the encryption key to be prefetched and decrease the volume of the decryption key to be prefetched when the volume of the transmission traffic is greater than the volume of the reception traffic.

2. The cryptographic communication apparatus according to claim 1, wherein the control unit (3) is further adapted to control a size of a memory space (55) allocated for storing the prefetched encryption key and a size of a memory space (56) allocated for storing the prefetched decryption key.

3. The cryptographic communication apparatus according to claim 1, further comprising:
a QKD unit (1) adapted to generate, by quantum key distribution (QKD), the common key;
a first memory (55) adapted to store therein the common key allocated as the encryption key; and
a second memory (56) adapted to store therein the common key allocated as the decryption key, wherein
when the volume of the encryption key to be prefetched is increased, a size of a space of the first memory (55) allocated for storing the encryption key is increased, and
when the volume of the decryption key to be prefetched is increased, a size of a space of the second memory (56) allocated for storing the decryption key is increased.

4. The cryptographic communication apparatus according to claim 1, further comprising:
a QKD unit (1) adapted to generate, by quantum key distribution (QKD), a common key shared with a communication destination apparatus, wherein
the encryption part (52) and the decryption part (53) are each achieved by a number of processes of multi-processing or a number of threads of multi-threading, and
the control unit (3) is adapted to increase the number of processes of multi-processing or the number of threads of multi-threading with an increase in speeds at which the common key is generated.

5. The cryptographic communication apparatus according to claim 1, further comprising:
a QKD unit (1) adapted to generate, by quantum key distribution (QKD), a common key shared with a communication destination apparatus, wherein
the encryption part (52) and the decryption part (53) are each achieved by a number of processes of multi-processing or a number of threads of multi-threading, and
the control unit (3) is adapted to increase the number of processes of multi-processing or the number of threads of multi-threading with an increase in residual volumes of the common key.

6. The cryptographic communication apparatus according to claim 1, wherein, when the residual volume of the encryption key is greater than the residual volume of the decryption key, the control unit (3) is adapted to vary the volume of the encryption key to be prefetched and the volume of the decryption key to be prefetched so that the volume of the encryption key to be prefetched is greater than the volume of the decryption key to be prefetched, and when the residual volume of the decryption key is greater than the residual volume of the encryption key, the control unit (3) is adapted to vary the volume of the encryption key to be prefetched and the volume of the decryption key to be prefetched so that the volume of the decryption key to be prefetched is greater than the volume of the encryption key to be prefetched.

7. The cryptographic communication apparatus according to claim 1, wherein
the encryption part (52) and the decryption part (53) are each achieved by a number of processes of multi-processing or a number of threads of multi-threading, and
when the residual volume of the encryption key is greater than the residual volume of the decryption key, the control unit (3) is adapted to vary the number of processes of multi-processing or the number of threads of multi-threading achieving the encryption part and the number of processes of multi-processing or the number of threads of multi-threading achieving the decryption part so that the number of processes or threads achieving the encryption part is greater than the number of processes or threads achieving the decryption part, and when the residual volume of the decryption key is greater than the residual volume of the encryption key, the control unit (3) is adapted to vary the number of processes of multi-processing or the number of threads of multi-threading achieving the encryption part and the number of processes of multi-processing or the number of threads of multi-threading achieving the decryption part so that the number of processes or threads achieving the decryption part is greater than the number of processes or threads achieving the encryption part.

8. The cryptographic communication apparatus according to claim 1, wherein
the encryption part (52) and the decryption part (53) are each achieved by a number of processes of multi-processing or a number of threads of multi-threading, and
the control unit (3) is adapted to control the number of processes of multi-processing or the number of threads of multi-threading achieving the encryption part and the number of processes of multi-processing or the number of threads of multi-threading achieving the decryption part using at least either one of communication statistical information and communication history information of cryptographic communication by the cryptographic communication apparatus.

9. The cryptographic communication apparatus according to claim 1, wherein the control unit (3) is adapted to control the volume of the encryption key to be prefetched and the volume of the decryption key to be prefetched according to an application that generates the plaintext data.

10. The cryptographic communication apparatus according to claim 1, wherein
the encryption part (52) and the decryption part (53) are each achieved by a number of processes of multi-processing or a number of threads of multi-threading, and
the control unit (3) is adapted to control the number of processes of multi-processing or the number of threads of multi-threading achieving the encryption part and the number of processes of multi-processing or the number of threads of multi-threading achieving the decryption part according to an application that generates the plaintext data.

11. A cryptographic communication system (300), comprising:
an encryption part (52) adapted to prefetch an encryption key for encrypting plaintext data before receiving the plaintext data and, when receiving the plaintext data, encrypt the plaintext data using the encryption key;
a decryption part (53) adapted to prefetch a decryption key for decrypting cipher text data before receiving the cipher text data and, when receiving the cipher text data, decrypt the cipher text data using the decryption key; and
a control unit (3) adapted to control a volume of the encryption key to be prefetched and a volume of the decryption key to be prefetched, wherein
the control unit (3) is adapted to allocate a common key shared with a communication destination apparatus, to the encryption key or the decryption key and increase the volume of the encryption key to be prefetched and the volume of the decryption key to be prefetched with an increase in speeds at which the common key is generated increase the volume of the encryption key to be prefetched with an increase in a residual volume of an encryption key holding part (21) holding the encryption key allocated from the common key, and increase the volume of the decryption key to be prefetched with an increase in a residual volume of a decryption key holding part (22) holding the decryption key allocated from the common key, and
the control unit (3) is adapted to:
identify a volume of communication traffic, a volume of transmission traffic, and a volume of reception traffic by using at least either one of communication statistical information and communication history information of cryptographic communication by the cryptographic communication apparatus; and
increase the volume of the encryption key to be prefetched and the volume of the decryption key to be prefetched with an increase in the volume of the communication traffic; and increase the volume of the encryption key to be prefetched and decrease the volume of the decryption key to be prefetched when the volume of the transmission traffic is greater than the volume of the reception traffic.

12. A cryptographic communication method, comprising:
prefetching an encryption key for encrypting plaintext data before receiving the plaintext data and, upon receipt of the plaintext data, encrypting the plaintext data using the encryption key;
prefetching a decryption key for decrypting cipher text data before receiving the cipher text data and, upon receipt of the cipher text data, decrypting the cipher text data using the decryption key; and
controlling a volume of the encryption key to be prefetched and a volume of the decryption key to be prefetched, wherein
the controlling is performed by a control unit (3) adapted to allocate a common key shared with a communication destination apparatus, to the encryption key or the decryption key and increase the volume of the encryption key to be prefetched and the volume of the decryption key to be prefetched with an increase in speeds at which the common key is generated , increase the volume of the encryption key to be prefetched with an increase in a residual volume of an encryption key holding part (21) holding the encryption key allocated from the common key, and increase the volume of the decryption key to be prefetched with an increase in a residual volume of a decryption key holding part (22) holding the decryption key allocated from the common key, and
the controlling is performed by:
identifying a volume of communication traffic, a volume of transmission traffic, and a volume of reception traffic by using at least either one of communication statistical information and communication history information of cryptographic communication; and
increasing the volume of the encryption key to be prefetched and the volume of the decryption key to be prefetched with an increase in the volume of the communication traffic; and increasing the volume of the encryption key to be prefetched and decreasing the volume of the decryption key to be prefetched when the volume of the transmission traffic is greater than the volume of the reception traffic.

13. A computer readable medium including programmed instructions, wherein the instructions, when executed by a computer, cause the computer to function as:
an encryption part (52) adapted to prefetch an encryption key for encrypting plaintext data before receiving the plaintext data and, when receiving the plaintext data, encrypt the plaintext data using the encryption key;
a decryption part (53) adapted to prefetch a decryption key for decrypting cipher text data before receiving the cipher text data and, when receiving the cipher text data, decrypt the cipher text data using the decryption key; and
a control unit (3) that controls a volume of the encryption key to be prefetched and a volume of the decryption key to be prefetched, wherein
the control unit (3) is adapted to allocate a common key shared with a communication destination apparatus, to the encryption key or the decryption key and increase the volume of the encryption key to be prefetched and the volume of the decryption key to be prefetched with an increase in speeds at which the common key is generated , increase the volume of the encryption key to be prefetched with an increase in a residual volume of an encryption key holding part (21) holding the encryption key allocated from the common key, and increase the volume of the decryption key to be prefetched with an increase in a residual volume of a decryption key holding part (22) holding the decryption key allocated from the common key, and
the control unit (3) is adapted to:
identify a volume of communication traffic, a volume of transmission traffic, and a volume of reception traffic by using at least either one of communication statistical information and communication history information of cryptographic communication by the cryptographic communication apparatus; and
increase the volume of the encryption key to be prefetched and the volume of the decryption key to be prefetched with an increase in the volume of the communication traffic; and increase the volume of the encryption key to be prefetched and decrease the volume of the decryption key to be prefetched when the volume of the transmission traffic is greater than the volume of the reception traffic.

## Patentansprüche

1. Kryptografische Kommunikationsvorrichtung, umfassend:
einen Verschlüsselungsteil (52), der dafür eingerichtet ist, einen Verschlüsselungsschlüssel zum Verschlüsseln von Klartextdaten im Voraus abzurufen, bevor die Klartextdaten empfangen werden, und, wenn die Klartextdaten empfangen werden, die Klartextdaten unter Verwendung des Verschlüsselungsschlüssels zu verschlüsseln;
einen Entschlüsselungsteil (53), der dafür eingerichtet ist, einen Entschlüsselungsschlüssel zum Entschlüsseln von Chiffriertextdaten im Voraus abzurufen, bevor die Chiffriertextdaten empfangen werden, und, wenn die Chiffriertextdaten empfangen werden, die Chiffriertextdaten unter Verwendung des Entschlüsselungsschlüssels zu entschlüsseln; und
eine Steuerungseinheit (3), die dafür eingerichtet ist, ein Volumen des im Voraus abzurufenden Verschlüsselungsschlüssels und ein Volumen des im Voraus abzurufenden Entschlüsselungsschlüssels zu steuern, wobei
die Steuerungseinheit (3) dafür eingerichtet ist, dem Verschlüsselungsschlüssel oder dem Entschlüsselungsschlüssel einen gemeinsamen Schlüssel zuzuteilen, der mit einer Kommunikationszielvorrichtung gemeinsam genutzt wird, und das Volumen des im Voraus abzurufenden Verschlüsselungsschlüssels und das Volumen des im Voraus abzurufenden Entschlüsselungsschlüssels mit einer Erhöhung der Geschwindigkeiten zu erhöhen, mit denen der gemeinsame Schlüssel erzeugt wird, das Volumen des im Voraus abzurufenden Verschlüsselungsschlüssels mit einer Erhöhung eines Restvolumens eines Verschlüsselungsschlüssel-Halteteils (21) zu erhöhen, der den aus dem gemeinsamen Schlüssel zugeteilten Verschlüsselungsschlüssel hält, und das Volumen des im Voraus abzurufenden Entschlüsselungsschlüssels mit einer Erhöhung eines Restvolumens eines Entschlüsselungsschlüssel-Halteteils (22) zu erhöhen, der den aus dem gemeinsamen Schlüssel zugeteilten Entschlüsselungsschlüssel hält, und
die Steuerungseinheit (3) dafür eingerichtet ist:
ein Volumen des Kommunikationsverkehrs, ein Volumen des Sendeverkehrs und ein Volumen des Empfangsverkehrs zu identifizieren, indem mindestens eines von Kommunikationsstatistikinformationen und Kommunikationsverlaufsinformationen aus kryptografischer Kommunikation durch die kryptografische Kommunikationsvorrichtung verwendet wird; und
das Volumen des im Voraus abzurufenden Verschlüsselungsschlüssels und das Volumen des im Voraus abzurufenden Entschlüsselungsschlüssels mit einer Zunahme des Volumens des Kommunikationsverkehrs zu erhöhen; und das Volumen des im Voraus abzurufenden Verschlüsselungsschlüssels zu erhöhen und das Volumen des im Voraus abzurufenden Entschlüsselungsschlüssels zu verringern, wenn das Volumen des Sendeverkehrs größer als das Volumen des Empfangsverkehrs ist.

2. Kryptografische Kommunikationsvorrichtung nach Anspruch 1, wobei die Steuerungseinheit (3) ferner dafür eingerichtet ist, eine Größe eines Speicherplatzes (55), der zum Speichern des im Voraus abgerufenen Verschlüsselungsschlüssels zugeteilt ist, und eine Größe eines Speicherplatzes (56), der zum Speichern des im Voraus abgerufenen Entschlüsselungsschlüssels zugeteilt ist, zu steuern.

3. Kryptografische Kommunikationsvorrichtung nach Anspruch 1, ferner umfassend:
eine QKD-Einheit (1), die dafür eingerichtet ist, den gemeinsamen Schlüssel durch Quantenschlüsselverteilung (QKD) zu erzeugen;
einen ersten Speicher (55), der dafür eingerichtet ist, den als Verschlüsselungsschlüssel zugeteilten gemeinsamen Schlüssel darin zu speichern; und
einen zweiten Speicher (56), der dafür eingerichtet ist, den als Entschlüsselungsschlüssel zugeteilten gemeinsamen Schlüssel darin zu speichern, wobei:
wenn das Volumen des im Voraus abzurufenden Verschlüsselungsschlüssels vergrößert wird, eine Größe eines Platzes des ersten Speichers (55), der zum Speichern des Verschlüsselungsschlüssels zugeteilt ist, vergrößert wird, und
wenn das Volumen des im Voraus abzurufenden Entschlüsselungsschlüssels vergrößert wird, eine Größe eines Platzes des zweiten Speichers (56), der zum Speichern des Entschlüsselungsschlüssels zugeteilt ist, vergrößert wird.

4. Kryptografische Kommunikationsvorrichtung nach Anspruch 1, ferner umfassend:
eine QKD-Einheit (1), die dafür eingerichtet ist, durch Quantenschlüsselverteilung (QKD) einen gemeinsamen Schlüssel zu erzeugen, der mit einer Kommunikationszielvorrichtung gemeinsam genutzt wird, wobei
der Verschlüsselungsteil (52) und der Entschlüsselungsteil (53) jeweils durch eine Anzahl von Multiprocessing-Prozessen oder eine Anzahl von Multithreading-Threads verwirklicht werden, und
die Steuerungseinrichtung (3) dafür eingerichtet ist, die Anzahl der Multiprocessing-Prozesse oder die Anzahl der Multithreading-Threads mit einer Erhöhung der Geschwindigkeiten, mit denen der gemeinsame Schlüssel erzeugt wird, zu erhöhen.

5. Kryptografische Kommunikationsvorrichtung nach Anspruch 1, ferner umfassend:
eine QKD-Einheit (1), die dafür eingerichtet ist, durch Quantenschlüsselverteilung (QKD) einen gemeinsamen Schlüssel zu erzeugen, der mit einer Kommunikationszielvorrichtung gemeinsam genutzt wird, wobei
der Verschlüsselungsteil (52) und der Entschlüsselungsteil (53) jeweils durch eine Anzahl von Multiprocessing-Prozessen oder eine Anzahl von Multithreading-Threads verwirklicht werden, und
die Steuerungseinrichtung (3) dafür eingerichtet ist, die Anzahl der Multiprocessing-Prozesse oder die Anzahl der Multithreading-Threads mit einer Zunahme der Restmengen des gemeinsamen Schlüssels zu erhöhen.

6. Kryptografische Kommunikationsvorrichtung nach Anspruch 1, wobei, wenn das Restvolumen des Verschlüsselungsschlüssels größer ist als das Restvolumen des Entschlüsselungsschlüssels, die Steuerungseinrichtung (3) dafür eingerichtet ist, das Volumen des im Voraus abzurufenden Verschlüsselungsschlüssels und das Volumen des im Voraus abzurufenden Entschlüsselungsschlüssels so zu verändern, dass das Volumen des im Voraus abzurufenden Verschlüsselungsschlüssels größer ist als das Volumen des im Voraus abzurufenden Entschlüsselungsschlüssels, und wenn das Restvolumen des Entschlüsselungsschlüssels größer ist als das Restvolumen des Verschlüsselungsschlüssels, die Steuerungseinrichtung (3) dafür eingerichtet ist, das Volumen des im Voraus abzurufenden Verschlüsselungsschlüssels und das Volumen des im Voraus abzurufenden Entschlüsselungsschlüssels so zu verändern, dass das Volumen des im Voraus abzurufenden Entschlüsselungsschlüssels größer ist als das Volumen des im Voraus abzurufenden Verschlüsselungsschlüssels.

7. Kryptografische Kommunikationsvorrichtung nach Anspruch 1, wobei
der Verschlüsselungsteil (52) und der Entschlüsselungsteil (53) jeweils durch eine Anzahl von Multiprocessing-Prozessen oder eine Anzahl von Multithreading-Threads verwirklicht werden, und
wenn das Restvolumen des Verschlüsselungsschlüssels größer ist als das Restvolumen des Entschlüsselungsschlüssels, die Steuerungseinheit (3) dafür eingerichtet ist, die Anzahl der Multiprocessing-Prozesse oder die Anzahl der Multithreading-Threads, die den Verschlüsselungsteil verwirklichen, und die Anzahl der Multiprocessing-Prozesse oder die Anzahl der Multithreading-Threads, die den Entschlüsselungsteil verwirklichen, so zu variieren, dass die Anzahl der Prozesse oder Threads, die den Verschlüsselungsteil verwirklichen, größer ist als die Anzahl der Prozesse oder Threads, die den Entschlüsselungsteil verwirklichen, und wenn das Restvolumen des Entschlüsselungsschlüssels größer ist als das Restvolumen des Verschlüsselungsschlüssels, die Steuerungseinheit (3) dafür eingerichtet ist, die Anzahl der Multiprocessing-Prozesse oder die Anzahl der Multithreading-Threads, die den Verschlüsselungsteil verwirklichen, und die Anzahl der Multiprocessing-Prozesse oder die Anzahl der Multithreading-Threads, die den Entschlüsselungsteil verwirklichen, so zu verändern, dass die Anzahl der Prozesse oder Threads, die den Entschlüsselungsteil verwirklichen, größer ist als die Anzahl der Prozesse oder Threads, die den Verschlüsselungsteil verwirklichen.

8. Kryptografische Kommunikationsvorrichtung nach Anspruch 1, wobei:
der Verschlüsselungsteil (52) und der Entschlüsselungsteil (53) jeweils durch eine Anzahl von Multiprocessing-Prozessen oder eine Anzahl von Multithreading-Threads verwirklicht werden, und
die Steuerungseinheit (3) dafür eingerichtet ist, die Anzahl der Multiprocessing-Prozesse oder die Anzahl der Multithreading-Threads, die den Verschlüsselungsteil verwirklichen, und die Anzahl der Multiprocessing-Prozesse oder die Anzahl der Multithreading-Threads, die den Entschlüsselungsteil verwirklichen, unter Verwendung von mindestens einem von Kommunikationsstatistikinformationen und Kommunikationsverlaufsinformationen aus kryptografischer Kommunikation durch die kryptografische Kommunikationsvorrichtung zu steuern.

9. Kryptografische Kommunikationsvorrichtung nach Anspruch 1, wobei die Steuerungseinrichtung (3) dafür eingerichtet ist, das Volumen des im Voraus abzurufenden Verschlüsselungsschlüssels und das Volumen des im Voraus abzurufenden Entschlüsselungsschlüssels gemäß einer Anwendung zu steuern, welche die Klartextdaten erzeugt.

10. Kryptografische Kommunikationsvorrichtung nach Anspruch 1, wobei:
der Verschlüsselungsteil (52) und der Entschlüsselungsteil (53) jeweils durch eine Anzahl von Multiprocessing-Prozessen oder eine Anzahl von Multithreading-Threads verwirklicht werden, und
die Steuerungseinheit (3) dafür eingerichtet ist, die Anzahl der Multiprocessing-Prozesse oder die Anzahl der Multithreading-Threads, die den Verschlüsselungsteil verwirklichen, und die Anzahl der Multiprocessing-Prozesse oder die Anzahl der Multithreading-Threads, die den Entschlüsselungsteil verwirklichen, gemäß einer Anwendung zu steuern, welche die Klartextdaten erzeugt.

11. Kryptografisches Kommunikationssystem (300), umfassend:
einen Verschlüsselungsteil (52), der dafür eingerichtet ist, einen Verschlüsselungsschlüssel zum Verschlüsseln von Klartextdaten im Voraus abzurufen, bevor die Klartextdaten empfangen werden, und, wenn die Klartextdaten empfangen werden, die Klartextdaten unter Verwendung des Verschlüsselungsschlüssels zu verschlüsseln;
einen Entschlüsselungsteil (53), der dafür eingerichtet ist, einen Entschlüsselungsschlüssel zum Entschlüsseln von Chiffriertextdaten im Voraus abzurufen, bevor die Chiffriertextdaten empfangen werden, und, wenn die Chiffriertextdaten empfangen werden, die Chiffriertextdaten unter Verwendung des Entschlüsselungsschlüssels zu entschlüsseln; und
eine Steuerungseinheit (3), die dafür eingerichtet ist, ein Volumen des im Voraus abzurufenden Verschlüsselungsschlüssels und ein Volumen des im Voraus abzurufenden Entschlüsselungsschlüssels zu steuern, wobei
die Steuerungseinheit (3) dafür eingerichtet ist, dem Verschlüsselungsschlüssel oder dem Entschlüsselungsschlüssel einen gemeinsamen Schlüssel zuzuteilen, der mit einer Kommunikationszielvorrichtung gemeinsam genutzt wird, und das Volumen des im Voraus abzurufenden Verschlüsselungsschlüssels und das Volumen des im Voraus abzurufenden Entschlüsselungsschlüssels mit einer Erhöhung der Geschwindigkeiten zu erhöhen, mit denen der gemeinsame Schlüssel erzeugt wird, das Volumen des im Voraus abzurufenden Verschlüsselungsschlüssels mit einer Erhöhung eines Restvolumens eines Verschlüsselungsschlüssel-Halteteils (21) zu erhöhen, der den aus dem gemeinsamen Schlüssel zugeteilten Verschlüsselungsschlüssel hält, und das Volumen des im Voraus abzurufenden Entschlüsselungsschlüssels mit einer Erhöhung eines Restvolumens eines Entschlüsselungsschlüssel-Halteteils (22) zu erhöhen, der den aus dem gemeinsamen Schlüssel zugeteilten Entschlüsselungsschlüssel hält, und
die Steuerungseinheit (3) dafür eingerichtet ist:
ein Volumen des Kommunikationsverkehrs, ein Volumen des Sendeverkehrs und ein Volumen des Empfangsverkehrs zu identifizieren, indem mindestens eines von Kommunikationsstatistikinformationen und Kommunikationsverlaufsinformationen aus kryptografischer Kommunikation durch die kryptografische Kommunikationsvorrichtung verwendet wird; und
das Volumen des im Voraus abzurufenden Verschlüsselungsschlüssels und das Volumen des im Voraus abzurufenden Entschlüsselungsschlüssels mit einer Zunahme des Volumens des Kommunikationsverkehrs zu erhöhen; und das Volumen des im Voraus abzurufenden Verschlüsselungsschlüssels zu erhöhen und das Volumen des im Voraus abzurufenden Entschlüsselungsschlüssels zu verringern, wenn das Volumen des Sendeverkehrs größer als das Volumen des Empfangsverkehrs ist.

12. Kryptografisches Kommunikationsverfahren, umfassend:
im Voraus Abrufen eines Verschlüsselungsschlüssels zum Verschlüsseln von Klartextdaten vor dem Empfangen der Klartextdaten und, bei Empfang der Klartextdaten, Verschlüsseln der Klartextdaten unter Verwendung des Verschlüsselungsschlüssels;
im Voraus Abrufen eines Entschlüsselungsschlüssels zum Entschlüsseln von Chiffriertextdaten vor dem Empfangen der Chiffriertextdaten und, bei Empfang der Chiffriertextdaten, Entschlüsseln der Chiffriertextdaten unter Verwendung des Entschlüsselungsschlüssels; und
Steuern eines Volumens des im Voraus abzurufenden Verschlüsselungsschlüssels und eines Volumens des im Voraus abzurufenden Entschlüsselungsschlüssels, wobei
das Steuern durch eine Steuerungseinrichtung (3) durchgeführt wird, die dafür eingerichtet ist, dem Verschlüsselungsschlüssel oder dem Entschlüsselungsschlüssel einen gemeinsamen Schlüssel zuzuteilen, der mit einer Kommunikationszielvorrichtung gemeinsam genutzt wird, und das Volumen des im Voraus abzurufenden Verschlüsselungsschlüssels und das Volumen des im Voraus abzurufenden Entschlüsselungsschlüssels mit einer Erhöhung der Geschwindigkeiten zu erhöhen, mit denen der gemeinsame Schlüssel erzeugt wird, das Volumen des im Voraus abzurufenden Verschlüsselungsschlüssels mit einer Erhöhung eines Restvolumens eines Verschlüsselungsschlüssel-Halteteils (21) zu erhöhen, der den aus dem gemeinsamen Schlüssel zugeteilten Verschlüsselungsschlüssel hält, und das Volumen des im Voraus abzurufenden Entschlüsselungsschlüssels mit einer Erhöhung eines Restvolumens eines Entschlüsselungsschlüssel-Halteteils (22) zu erhöhen, der den aus dem gemeinsamen Schlüssel zugeteilten Entschlüsselungsschlüssel hält, und
die Steuerung durch Folgendes durchgeführt wird:
Identifizieren eines Volumens von Kommunikationsverkehr, eines Volumens von Sendeverkehr und eines Volumens von Empfangsverkehr durch Verwenden von mindestens einem von Kommunikationsstatistikinformationen und Kommunikationsverlaufsinformationen aus kryptografischer Kommunikation; und
Erhöhen des Volumens des im Voraus abzurufenden Verschlüsselungsschlüssels und des Volumens des im Voraus abzurufenden Entschlüsselungsschlüssels mit einer Zunahme des Volumens des Kommunikationsverkehrs; und Erhöhen des Volumens des im Voraus abzurufenden Verschlüsselungsschlüssels und Verringern des Volumens des im Voraus abzurufenden Entschlüsselungsschlüssels, wenn das Volumen des Sendeverkehrs größer ist als das Volumen des Empfangsverkehrs.

13. Computerlesbares Medium, das programmierte Anweisungen einschließt, wobei die Anweisungen, wenn sie durch einen Computer ausgeführt werden, den Computer veranlassen, als Folgendes zu fungieren:
ein Verschlüsselungsteil (52), der dafür eingerichtet ist, einen Verschlüsselungsschlüssel zum Verschlüsseln von Klartextdaten im Voraus abzurufen, bevor die Klartextdaten empfangen werden, und, wenn die Klartextdaten empfangen werden, die Klartextdaten unter Verwendung des Verschlüsselungsschlüssels zu verschlüsseln;
ein Entschlüsselungsteil (53), der dafür eingerichtet ist, einen Entschlüsselungsschlüssel zum Entschlüsseln von Chiffriertextdaten im Voraus abzurufen, bevor die Chiffriertextdaten empfangen werden, und, wenn die Chiffriertextdaten empfangen werden, die Chiffriertextdaten unter Verwendung des Entschlüsselungsschlüssels zu entschlüsseln; und
eine Steuerungseinheit (3), die ein Volumen des im Voraus abzurufenden Verschlüsselungsschlüssels und ein Volumen des im Voraus abzurufenden Entschlüsselungsschlüssels steuert, wobei
die Steuerungseinheit (3) dafür eingerichtet ist, dem Verschlüsselungsschlüssel oder dem Entschlüsselungsschlüssel einen gemeinsamen Schlüssel zuzuteilen, der mit einer Kommunikationszielvorrichtung gemeinsam genutzt wird, und das Volumen des im Voraus abzurufenden Verschlüsselungsschlüssels und das Volumen des im Voraus abzurufenden Entschlüsselungsschlüssels mit einer Erhöhung der Geschwindigkeiten zu erhöhen, mit denen der gemeinsame Schlüssel erzeugt wird, das Volumen des im Voraus abzurufenden Verschlüsselungsschlüssels mit einer Erhöhung eines Restvolumens eines Verschlüsselungsschlüssel-Halteteils (21) zu erhöhen, der den aus dem gemeinsamen Schlüssel zugeteilten Verschlüsselungsschlüssel hält, und das Volumen des im Voraus abzurufenden Entschlüsselungsschlüssels mit einer Erhöhung eines Restvolumens eines Entschlüsselungsschlüssel-Halteteils (22) zu erhöhen, der den aus dem gemeinsamen Schlüssel zugeteilten Entschlüsselungsschlüssel hält, und
die Steuerungseinheit (3) dafür eingerichtet ist:
ein Volumen des Kommunikationsverkehrs, ein Volumen des Sendeverkehrs und ein Volumen des Empfangsverkehrs zu identifizieren, indem mindestens eines von Kommunikationsstatistikinformationen und Kommunikationsverlaufsinformationen aus kryptografischer Kommunikation durch die kryptografische Kommunikationsvorrichtung verwendet wird; und
das Volumen des im Voraus abzurufenden Verschlüsselungsschlüssels und das Volumen des im Voraus abzurufenden Entschlüsselungsschlüssels mit einer Zunahme des Volumens des Kommunikationsverkehrs zu erhöhen; und das Volumen des im Voraus abzurufenden Verschlüsselungsschlüssels zu erhöhen und das Volumen des im Voraus abzurufenden Entschlüsselungsschlüssels zu verringern, wenn das Volumen des Sendeverkehrs größer als das Volumen des Empfangsverkehrs ist.

## Revendications

1. Appareil de communication cryptographique, comprenant :
une partie de chiffrement (52) apte à pré-extraire une clé de chiffrement pour chiffrer des données de texte en clair avant de recevoir les données de texte en clair et, lors de la réception des données de texte en clair, chiffrer les données de texte en clair en utilisant la clé de chiffrement ;
une partie de décryptage (53) apte à pré-extraire une clé de décryptage pour décrypter des données de texte codées avant de recevoir les données de texte codées et, lors de la réception des données de texte codées, décrypter les données de texte codées en utilisant la clé de décryptage ; et
une unité de commande (3) apte à commander un volume de la clé de chiffrement à pré-extraire et un volume de la clé de décryptage à pré-extraire, dans lequel
l'unité de commande (3) est apte à attribuer une clé commune partagée avec un appareil de destination de communication, à la clé de chiffrement ou à la clé de décryptage et à augmenter le volume de la clé de chiffrement à pré-extraire et le volume de la clé de décryptage à pré-extraire avec une augmentation des vitesses auxquelles la clé commune est générée, à augmenter le volume de la clé de chiffrement à pré-extraire avec une augmentation d'un volume résiduel d'une partie de support de clé de chiffrement (21) qui maintient la clé de chiffrement attribuée depuis la clé commune, et à augmenter le volume de la clé de décryptage à pré-extraire avec une augmentation d'un volume résiduel d'une partie de maintien de la clé de décryptage (22) maintenant la clé de décryptage attribuée depuis la clé commune, et
l'unité de commande (3) est apte à :
identifier un volume de trafic de communication, un volume de trafic de transmission, et un volume de trafic de réception en utilisant au moins l'une parmi des informations statistiques de communication et des informations d'historique de communication de communication cryptographique par l'appareil de communication cryptographique ; et
augmenter le volume de la clé de chiffrement à pré-extraire et le volume de la clé de décryptage à pré-extraire avec une augmentation du volume du trafic de communication ; et à augmenter le volume de la clé de chiffrement à pré-extraire et une diminution du volume de la clé de décryptage à pré-extraire quand le volume du trafic de transmission est supérieur au volume du trafic de réception.

2. Appareil de communication cryptographique selon la revendication 1, dans lequel l'unité de commande (3) est en outre apte à commander une taille d'un espace de mémoire (55) attribué pour stocker la clé de chiffrement pré-extraite et une taille d'un espace de mémoire (56) attribué pour stocker la clé de décryptage pré-extraite.

3. Appareil de communication cryptographique selon la revendication 1, comprenant en outre :
une unité QKD (1) apte à générer, par une distribution de clé quantique (QKD), la clé commune ;
une première mémoire (55) apte à stocker en son sein la clé commune attribuée comme clé de chiffrement ; et
une seconde mémoire (56) apte à stocker en son sein la clé commune attribuée comme clé de décryptage ; dans lequel
quand le volume de la clé de chiffrement à pré-extraire est augmenté, une taille d'un espace de la première mémoire (55) attribué pour stocker la clé de chiffrement est augmentée, et
quand le volume de la clé de décryptage à pré-extraire est augmenté, une taille d'un espace de la seconde mémoire (56) attribué pour stocker la clé de décryptage est augmenté.

4. Appareil de communication cryptographique selon la revendication 1, comprenant en outre :
une unité QKD (1) apte à générer, par une distribution de clé quantique (QKD), une clé commune partagée avec un appareil de destination de communication, dans lequel
la partie de chiffrement (52) et la partie de décryptage (53) sont chacune réalisée par un nombre de procédés de multitraitement ou un nombre de threads de multithreading, et
l'unité de commande (3) est apte à augmenter le nombre de procédés de multitraitement ou le nombre de threads de multithreading avec une augmentation des vitesses auxquelles la clé commune est générée.

5. Appareil de communication cryptographique selon la revendication 1, comprenant en outre :
une unité QKD (1) apte à générer, par une distribution de clé quantique (QKD), une clé commune partagée avec un appareil de destination de communication, dans lequel
la partie de chiffrement (52) et la partie de décryptage (53) sont chacune réalisées par un nombre de procédés de multitraitement ou un nombre de threads de multithreading, et
l'unité de commande (3) est apte à augmenter le nombre de procédés de multitraitement ou le nombre de threads de multithreading avec une augmentation des volumes résiduels de la clé commune.

6. Appareil de communication cryptographique selon la revendication 1, dans lequel, quand le volume résiduel de la clé de chiffrement est supérieur au volume résiduel de la clé de décryptage, l'unité de commande (3) est apte à varier le volume de la clé de chiffrement à pré-extraire et le volume de la clé de décryptage à pré-extraire, de sorte que le volume de la clé de chiffrement à pré-extraire soit supérieur au volume de la clé de décryptage à pré-extraire, et lorsque le volume résiduel de la clé de décryptage est supérieur au volume résiduel de la clé de chiffrement, l'unité de commande (3) est apte à varier le volume de la clé de chiffrement à pré-extraire et le volume de la clé de décryptage à pré-extraire de sorte que le volume de la clé de décryptage à pré-extraire soit supérieur au volume de la clé de chiffrement à pré-extraire.

7. Appareil de communication cryptographique selon la revendication 1, dans lequel
la partie de chiffrement (52) et la partie de décryptage (53) sont chacune réalisées par un nombre de procédés de multitraitement ou un nombre de threads de multithreading, et
lorsque le volume résiduel de la clé de chiffrement est supérieur au volume résiduel de la clé de décryptage, l'unité de commande (3) est apte à varier le nombre de procédés de multitraitement ou le nombre de threads de multithreading réalisant la partie de chiffrement et le nombre de procédés de multitraitement ou le nombre de fils de multithreading réalisant la partie de décryptage de sorte que le nombre de procédés ou threads réalisant la partie de chiffrement soit supérieur au nombre de procédés ou threads réalisant la partie de décryptage, et lorsque le volume résiduel de la clé de décryptage est supérieur au volume résiduel de la clé de chiffrement, l'unité de commande (3) est apte à varier le nombre de procédés de multitraitement ou le nombre de threads de multithreading réalisant la partie de chiffrement et le nombre de procédés de multitraitement ou le nombre de threads de multithreading réalisant la partie de décryptage de sorte que le nombre de procédés ou threads réalisant la partie de décryptage soit supérieur au nombre de procédés ou threads réalisant la partie de chiffrement.

8. Appareil de communication cryptographique selon la revendication 1, dans lequel
la partie de chiffrement (52) et la partie de décryptage (53) sont chacune réalisée par un nombre de procédés de multitraitement ou un nombre de threads de multithreading, et
l'unité de commande (3) est apte à commander le nombre de procédés de multitraitement ou le nombre de threads de multithreading réalisant la partie chiffrement et le multitraitement ou le nombre de threads de multithreading réalisant la partie décryptage en utilisant au moins l'une parmi des informations statistiques de communication et des informations d'historique de communication de communication cryptographique par l'appareil de communication cryptographique.

9. Appareil de communication cryptographique selon la revendication 1, dans lequel l'unité de commande (3) est apte à commander le volume de la clé de chiffrement à pré-extraire et le volume de la clé de décryptage à pré-extraire selon une application qui génère les données de texte en clair.

10. Appareil de communication cryptographique selon la revendication 1, dans lequel
la partie de chiffrement (52) et la partie de décryptage (53) sont chacune atteinte par un nombre de procédés de multitraitement ou un nombre de threads de multithreading, et
l'unité de commande (3) est apte à commander le nombre de procédés de multitraitement ou le nombre de threads de multithreading réalisant la partie de chiffrement et le nombre de procédés de multitraitement ou le nombre de threads de multithreading réalisant la partie de décryptage selon une application qui génère les données de texte en clair.

11. Système de communication cryptographique (300), comprenant :
une partie de chiffrement (52) apte à pré-extraire une clé de chiffrement pour chiffrer des données en texte clair avant de recevoir les données de texte en clair et, lors de la réception des données en texte clair, chiffrer les données de texte en clair en utilisant la clé de chiffrement ;
une partie de décryptage (53) apte à pré-extraire une clé de décryptage pour décrypter des données de texte chiffrées avant de recevoir les données de texte chiffrées et, lors de la réception des données de texte chiffrées, décrypter les données de texte chiffrées en utilisant la clé de décryptage ; et
une unité de commande (3) apte à commander un volume de la clé de chiffrement à pré-extraire et un volume de la clé de décryptage à pré-extraire, dans lequel
l'unité de commande (3) est apte à attribuer une clé commune partagée avec un appareil de destination de communication, à la clé de chiffrement ou à la clé de décryptage et à augmenter le volume de la clé de chiffrement à pré-extraire et le volume de la clé de décryptage à pré-extraire avec une augmentation des vitesses auxquelles la clé commune est générée, à augmenter le volume de la clé de chiffrement à pré-extraire avec une augmentation d'un volume résiduel d'une partie de support de clé de chiffrement (21) maintenant la clé de chiffrement attribuée depuis la clé commune, et à augmenter le volume de la clé de décryptage à pré-extraire avec une augmentation d'un volume résiduel d'une partie de maintien d'une clé de décryptage (22) maintenant la clé de décryptage attribuée depuis la clé commune, et
l'unité de commande (3) est apte à :
identifier un volume de trafic de communication, un volume de trafic de transmission, et un volume de trafic de réception en utilisant au moins l'une parmi des informations statistiques de communication et des informations d'historique de communication de communication cryptographique par l'appareil de communication cryptographique ; et
augmenter le volume de la clé de chiffrement à pré-extraire et le volume de la clé de décryptage à pré-extraire avec une augmentation du volume du trafic de communication ; et à augmenter le volume de la clé de chiffrement à pré-extraire et diminuer le volume de la clé de décryptage à pré-extraire lorsque le volume du trafic de transmission est supérieur au volume du trafic de réception.

12. Procédé de communication cryptographique, comprenant :
la pré-extraction d'une clé de chiffrement pour chiffrer des données de texte en clair avant de recevoir les données de texte en clair et, lors de la réception des données de texte en clair, chiffrer les données de texte en clair en utilisant la clé de chiffrement ;
la pré-extraction d'une clé de décryptage pour décrypter des données de texte chiffrées avant de recevoir les données de texte chiffrées et, lors de la réception des données de texte chiffrées, décrypter les données de texte chiffrées en utilisant la clé de décryptage ; et
commander un volume de la clé de chiffrement à pré-extraire et un volume de la clé de décryptage à pré-extraire, dans lequel
la commande est réalisée par une unité de commande (3) apte à attribuer une clé commune partagée avec un appareil de destination de communication, à la clé de chiffrement ou à la clé de décryptage et à augmenter le volume de la clé de chiffrement à pré-extraire et le volume de la clé de décryptage à pré-extraire avec une augmentation de vitesses auxquelles la clé commune est générée, à augmenter le volume de la clé de chiffrement à pré-extraire avec une augmentation d'un volume résiduel d'une pièce de maintien d'une clé de chiffrement (21) maintenant la clé de chiffrement attribuée depuis la clé commune, et à augmenter le volume de la clé de décryptage à pré-extraire avec une augmentation d'un volume résiduel d'une partie de maintien de la clé de décryptage (22) maintenant la clé de décryptage attribuée depuis la clé commune, et
la commande est réalisée en :
identifiant un volume de trafic de communication, un volume de trafic de transmission et un volume de trafic de réception en utilisant au moins l'une parmi des informations statistiques de communication et des informations d'historique de communication de communication cryptographique ; et
augmentant le volume de la clé de chiffrement à pré-extraire et le volume de la clé de décryptage à pré-extraire avec une augmentation du volume du trafic de communication, et en augmentant le volume de la clé de chiffrement à pré-extraire et en diminuant le volume de la clé de décryptage à pré-extraire quand le volume du trafic de transmission est supérieur au volume du trafic de réception.

13. Support lisible sur ordinateur incluant des instructions programmées, dans lequel les instructions, lorsqu'elles sont exécutées par un ordinateur, amènent l'ordinateur à fonctionner comme :
une partie de chiffrement (52) apte à pré-extraire une clé de chiffrement pour chiffrer des données de texte en clair avant de recevoir les données de texte en clair et, lors de la réception de données de texte en clair, crypter les données de texte en clair en utilisant la clé de chiffrement ;
une partie de décryptage (53) apte à pré-extraire une clé de décryptage pour décrypter des données de texte chiffrées avant de recevoir les données de texte chiffrées et, lors de la réception de données de texte chiffrées, décrypter les données de texte chiffrées en utilisant la clé de décryptage ; et
une unité de commande (3) qui commande un volume de la clé de chiffrement à pré-extraire et un volume de la clé de décryptage à pré-extraire, dans lequel
l'unité de commande (3) est apte à attribuer une clé commune partagée avec un appareil de destination de communication, à la clé de chiffrement ou à la clé de décryptage et à augmenter le volume de la clé de chiffrement à pré-extraire et le volume de la clé de décryptage à pré-extraire avec une augmentation des vitesses auxquelles la clé commune est générée, à augmenter le volume de la clé de chiffrement à pré-extraire avec une augmentation d'un volume résiduel d'une partie de maintien de clé de chiffrement (21) maintenant la clé de chiffrement attribuée depuis la clé commune, et à augmenter le volume de la clé de décryptage à pré-extraire avec une augmentation d'un volume résiduel d'une partie de maintien d'une clé de décryptage (22) maintenant la clé de décryptage attribuée depuis la clé commune, et
l'unité de commande (3) est apte à :
identifier un volume de trafic de communication, un volume de trafic de transmission, et un volume de trafic de réception en utilisant au moins l'une parmi des informations statistiques de communication et des informations d'historique de communication de communication cryptographique par l'appareil de communication cryptographique ; et
augmenter le volume de la clé de chiffrement à pré-extraire et le volume de la clé de décryptage à pré-extraire avec une augmentation du volume du trafic de communication ; et à augmenter le volume de la clé de chiffrement à pré-extraire et diminuer le volume de la clé de décryptage à pré-extraire lorsque le volume du trafic de transmission est supérieur au volume du trafic de réception.
